# EUROPÄISCHE PATENTSCHRIFT

(11) **EP 2 902 614 B1**
(45) Veröffentlichungstag und Bekanntmachung des Hinweises auf die Patenterteilung: **25.04.2018**
(21) Anmeldenummer: 14199942.5
(22) Anmeldetag: 23.12.2014
(51) Int. Cl.: F02M 55/00, F16J 15/08

(54) **KRAFTSTOFFINJEKTOR MIT EINER DICHTSCHEIBE**
FUEL INJECTOR WITH A SEALING DISC
INJECTEUR DE CARBURANT AVEC UNE RONDELLE D'ÉTANCHÉITÉ

(30) Priorität: 03.02.2014 DE 102014201854
(43) Veröffentlichungstag der Anmeldung: 05.08.2015
(73) Patentinhaber: ROBERT BOSCH GMBH, 70442 Stuttgart (DE)
(72) Erfinder: Leiser, Stefan, 70188 Stuttgart (DE); Lalic, Hrvoje, 71636 Ludwigsburg (DE)

(56) Entgegenhaltungen:
- EP-A1- 2 072 818
- WO-A1-2009/071462
- DE-A1- 10 115 214
- US-A1- 2006 001 222

## Beschreibung

### Stand der Technik

Bei Kraftstoffeinspritzsystemen für luftverdichtende Brennkraftmaschinen, wie zum Beispiel Dieselmotoren, kommen Einspritzsysteme mit Hochdrucksammelraum, sogenannte Common Rail-Einspritzsysteme zum Einsatz. Diese Art von Kraftstoffeinspritzsystem umfasst bekannterweise Injektoren zum Einspritzen von Kraftstoff in die Brennräume der Brennkraftmaschine, die den im Kraftstoffeinspritzsystem herrschenden Drücken hinsichtlich Dichtfähigkeit und Materialfestigkeit standhalten müssen. Zu diesem Zweck werden an Injektoren dieser Art unter anderem Dichtelemente eingesetzt, mit denen eine Abdichtung des Hochdruckbereiches des Injektors gegenüber Bereichen niedrigeren Drucks vorgenommen wird. Wird nun optimierungsbedingt das Druckniveau in den bekannten Kraftstoffeinspritzsystemen angehoben, beispielsweise zur Erzeugung eines höheren thermodynamischen Wirkungsgrades der Brennkraftmaschine, steigen auch die technischen Anforderungen an die Dichtelemente des Kraftstoffinjektors.

Ein Beispiel für ein bekanntes Dichtelement eines in Figur 3 gezeigten Kraftstoffinjektors 9 eines Kraftstoffhochdruckeinspritzsystems ist aus der DE 101 15 214 A1 bekannt, bei dem der Injektor 9 im Wesentlichen aus einer Spannmutter 91, einem darin angeordneten Düsenkörper 92, einem Haltekörper 93, auch als Injektorkörper bekannt, und einem Nadelkörper 94 aufgebaut ist, der sich aus einem Ventilbolzen 941, einem Druckbolzen 942 und einer Ventilnadel 943 zusammensetzt. Der Nadelkörper 94 ist dabei über den Druckbolzen 942 mittels einer Schließfeder 95 in Schließrichtung der im Düsenkörper 92 vorgesehenen Düsenöffnungen 921 vorgespannt. Der Nadelkörper 94 ist bei dem Injektor 9 in einer zentralen Durchgangsbohrung angeordnet, die sich durch den Haltekörper 93 und den Düsenkörper 92 bis hin zu den Düsenöffnungen 921 erstreckt. Eine dezentral angeordnete Hochdruckkraftstoffzulaufleitung 96 verläuft neben der zentralen Bohrung ebenfalls durch den Haltekörper 93 und den Düsenkörper 92 zu einem in dem Düsenkörper 92 vorgesehenen Druckraum 922. Um bei dem vorliegend beschriebenen Injektor 9 eine Dichtigkeit des Zulaufs des mit Hochdruck eingeleiteten Kraftstoffs zu dem Druckraum 922 zu gewährleisten, ist in der DE 101 15 214 A1 eine an die Dichtigkeitsanforderungen der Schnittstelle zwischen dem Düsenkörper 92 und dem Haltekörper 93 angepasste Dichtfolie 97 vorgesehen, die zwischen eben diesen Komponenten angeordnet ist.

Mittlerweile sind neben den in der DE 101 15 214 A1 beschriebenen Injektoren weiterentwickelte Hochdruckeinspritzinjektoren bekannt, bei denen auf eine dezentrale Hochdruckkraftstoffzulaufleitung verzichtet werden kann und bei denen der Kraftstoff direkt in der zentralen Durchgangsbohrung des Injektors zugeführt wird. Dadurch kommt es jedoch neben bauformbedingt notwendigen Umgestaltungen zu weiter erhöhten Anforderungen an die Dichtigkeit zwischen den einzelnen Bauteilen des Injektors, um Drucksteigerungen zu ermöglichen. Beispielsweise bei den Injektoren der CRI2©-Reihe von Bosch, die unter eben diese Gruppe an weiterentwickelten Hochdruckeinspritzinjektoren fallen, kommt dazu eine lösbare statische Metallabdichtung zwischen dem Düsenkörper und dem Haltekörper zum Einsatz, bei der der Düsenkörper durch eine von der Spannmutter eingebrachte Axialkraft gegen den Haltekörper gepresst wird, um dadurch die "harte" Metallabdichtung zwischen diesen Bauteilen zu erzeugen. Insbesondere bei den Injektoren der CRI2-20©-Reihe, bei denen im Gegensatz zu früheren CRI2©-Generationen keine Leckagerückführbohrung im Haltekörper mehr vorgesehen ist, muss die Dichtstelle zwischen dem Düsenkörper und dem Haltekörper den auf einer großen Fläche anliegenden Injektorsystemdruck sicher nach außen abdichten, wobei zu diesem Zweck bereits eine kleine, konzentrische, abgesetzte Dichtfläche an dem Düsenkörper vorgesehen sein kann. Weiterentwicklungen auf diesem Gebiet hinsichtlich weiterer Drucksteigerungen sind jedoch wünschenswert.

So ein ähnliches Dichtelement ist auch in der WO 2009/071462 A1 beschrieben und dargestellt.

### Offenbarung der Erfindung

Die vorliegende Erfindung betrifft einen Kraftstoffinjektor, insbesondere einen Kraftstoffinjektor für eine selbstzündende Brennkraftmaschine, wie zum Beispiel einen Dieselmotor.
Erfindungsgemäß wird ein Kraftstoffinjektor zum Einspritzen von Kraftstoff in einen Brennraum einer Brennkraftmaschine bereitgestellt. Der Kraftstoffinjektor dient dabei vorzugsweise zum Einspritzen von mit Hochdruck beaufschlagtem Kraftstoff in den Brennraum, der wiederum in der Haltekörperdurchgangsbohrung und der Düsenkörperinnenbohrung innerhalb des Kraftstoffinjektors geführt ist. Die Brennkraftmaschine kann vorzugsweise eine selbstzündende Brennkraftmaschine wie zum Beispiel ein Dieselmotor sein. Der erfindungsgemäße Kraftstoffinjektor weist eine Spannmutter, auch Düsenspannmutter genannt, einen in der Spannmutter angeordneten Haltekörper mit einer vorzugsweise zentralen Haltekörperdurchgangsbohrung sowie einen in der Spannmutter angeordneten Düsenkörper mit einer vorzugsweise zentralen Düsenkörperinnenbohrung auf. Der Düsenkörper weist zudem zumindest eine Düsenöffnung auf, auch als Einspritzbohrung bezeichnet, durch die der in der Haltekörperdurchgangsbohrung und der Düsenkörperinnenbohrung geführte Kraftstoff in die Brennkammer eingespritzt wird. Der Kraftstoffinjektor weist weiterhin einen in der Haltekörperdurchgangsbohrung und der Düsenkörperinnenbohrung angeordneten Nadelkörper auf, der die zumindest eine Düsenöffnung verschließen und freigeben kann, vorzugsweise indem dieser gegen den Düsenkörper mit einer Feder vorgespannt ist. Ferner weist der erfindungsgemäße Kraftstoffinjektor zumindest eine Dichtscheibe auf, die zwischen dem Haltekörper und dem Düsenkörper eingespannt ist und zumindest einen Übergang zwischen der Haltekörperdurchgangsbohrung und der Düsenkörperinnenbohrung abdichtet. Auf diese Art und Weise kann mit Hochdruck beaufschlagter Kraftstoff, sogenannter Hochdruckkraftstoff, in der Haltekörperdurchgangsbohrung und der Düsenkörperinnenbohrung neben dem Nadelkörper geführt werden, ohne dass der Kraftstoff nach außen zwischen die Spannmutter und den Haltekörper gelangen kann, so dass eine Leckage des Kraftstoffs aus dem Injektor heraus verhindert wird. Die Dichtscheibe erreicht demnach eine größere Robustheit des Verbandes aus Injektorbestandskomponenten, indem diese zwischen die bekannten Dichtpartner als zusätzliches Dichtelement eingebracht ist. Die erfindungsgemäße Dichtscheibe weist eine Durchgangsbohrung, vorzugsweise eine in axialer Richtung verlaufende zentrale Durchgangsbohrung auf. Ferner weist die erfindungsgemäße Dichtscheibe im axialen Querschnitt, also in einem Querschnitt quer zu der Längsachse der Dichtscheibe, eine sogenannte Wellenform auf, das heißt eine Querschnittsgestalt, die sich in radialer Richtung im Dichtbereich wellenartig erstreckt, wobei der Begriff "wellenartig" zumindest eine einzelne Welle beschreibt, deren Wellenkamm abgerundet oder alternativ dazu auch spitz oder trapezförmig zusammenlaufen kann. Die Dichtscheibe ist dabei so ausgebildet, dass deren Wellenform zumindest eine axiale Erhöhung aufweist, die dem Wellenberg der Wellenform entspricht und die im Verhältnis zu der Durchgangsbohrung einen radial angeordneten konzentrischen Kreis ausbildet. Alternativ dazu kann die Dichtgeometrie zum Beispiel exzentrisch oder als Langloch angeordnet sein, falls die Ausführung der Durchgangsbohrung dies erforderlich macht. Durch eine derartige Wellenform und den dadurch entstehenden steifen Wellenringen kommt es bei einem Einspannen der Dichtscheibe von beiden Seiten zu einer ringförmigen lokalen Erhöhung der Flächenpressung am Ort des Wellenbergs und dadurch zu einer verbesserten Dichtigkeit durch die Dichtscheibe. Weiter weist die erfindungsgemäße Dichtscheibe eine Wellenform auf, die durch abwechselnde axiale Erhöhungen und Vertiefungen, die Wellenbergen und Wellentälern entsprechen, ausgebildet wird, wobei die abwechselnd auftretenden Wellenberge und Wellentäler jeweils einen radial angeordneten konzentrischen Kreis ausbilden. Folglich entsteht durch die Vielzahl an Wellenbergen und Wellentälern eine Anordnung von ineinander angeordneten konzentrischen Kreisen, die sich von einem Außenumfang der Dichtscheibe bis zu deren zentraler Durchgangsbohrung erstrecken. Gemäß einer bevorzugten Ausführung weist die Wellenform zwei oder drei Wellenberge auf, die notwendig sind, um eine optimale Dichtwirkung zu erzielen. Die Dichtscheibe ist vorzugsweise aus einem Stahlblech mit hoher Festigkeit ausgebildet, wodurch die Dichtscheibe eine ausreichende Steifigkeit erhält, um bei einer beidseitigen Einspannung die gewünschte Dichtigkeit zu erreichen.

Mit der wellenförmigen Dichtscheibe lassen sich vorzugsweise entsprechende Verbindungen, das heißt Übergänge mit einem Druckunterschied im Bereich bis mindestens 4000 bar und mehr abdichten.

Der Haltekörper des Kraftstoffinjektors ist in der Spannmutter durch eine Schraubverbindung gegen den in der Spannmutter axial gehaltenen Düsenkörper eingespannt, wodurch erreicht wird, dass die Dichtscheibe zwischen dem Haltekörper und dem Düsenkörper beidseitig gepresst gehalten ist. Die Schraubverbindung ist dabei durch ein Innengewinde am Innenumfang der Spannmutter und ein Außengewinde am Außenumfang des Haltekörpers umgesetzt, so dass eine Verschraubung des Haltekörpers in die Spannmutter eine axiale Bewegung des Haltekörpers in Richtung des Düsenkörpers bewirkt. Folglich kann die Dichtscheibe durch Einschrauben des Haltekörpers in die Spannmutter zwischen einer Stirnseite des Haltekörpers, die dem Düsenkörper zugewandt ist, und einer Stirnseite des Düsenkörpers, die wiederum dem Haltekörper zugeordnet ist, eingespannt und zwischen diesen geklemmt werden. Bei einer Erhöhung des Drucks der so erreichten Einspannung wird die axiale Wellenform der Dichtscheibe so verformt, dass die Dichtscheibe im verformten Zustand keine sichtbare Wellenform mehr aufweist sondern vielmehr die Gestalt einer regulären Beilegscheibe einnimmt. Die hier beschriebene Verformung kann neben einer elastischen Verformung auch einen plastischen Anteil aufweisen. Durch die aufgrund der Rückstellkraft der Dichtscheibe zumindest teilweise in die Wellenform erzeugten Gegenkräfte der Dichtscheibe gegen die Einspannung zwischen den Haltekörper und den Düsenkörper entsteht eine Verspannung mit mehreren ringförmigen lokalen Erhöhungen der Flächenpressung zwischen dem Haltekörper und dem Düsenkörper, die zu einer erhöhten Dichtigkeit durch die Dichtscheibe am Übergang zwischen Haltekörper und Düsenkörper führen.

### Vorteile der Erfindung

Die erfindungsgemäße wellenförmige Dichtscheibe verfügt über verschiedene Eigenschaften, die die Sensibilität des gesamten Injektorbauteilverbandes gegen die teilweise weiter oben bereits genannten relevanten Einflussfaktoren bezüglich Dichtigkeit erheblich reduzieren. Ferner kommt es im Vergleich zu einer weichen Dichtscheibe zu einer Vermeidung beziehungsweise Kompensation von sogenannter Exemplarstreuung über die Gesamtlänge des entsprechenden Kraftstoffinjektors, da die wellenförmige Dichtscheibe zwischen dem Düsenkörper und dem Haltekörper immer auf Block verschraubt, also in anderen Worten zwischen diesen Bauteilen unter beidseitigem Druck verspannt wird. Der Begriff Exemplarstreuung beschreibt dabei die Variabilität der Dimensionen der einzelnen gefertigten Bauteile des Injektors, die durch die Fertigungstoleranzen der Bauteile zueinander hervorgerufen werden können und durch die nicht exakt definierbare elastisch-plastische Verformung der weichen erhöht werden würden.

Durch die Verwendung der im Dichtbereich wellenförmigen Dichtscheibe ist es zudem nicht mehr erforderlich, die zueinander angeordneten Oberflächen des Haltekörpers und des Düsenkörpers, die vor dem Einsatz der Dichtscheibe als Dichtflächen wirkten, feinzuschleifen oder mit einer besonderen Endbearbeitung, einem sogenannten Finish zu versehen. Zum sicheren Abdichten mittels der Dichtscheibe werden nur noch Oberflächen mit einer gemittelten Rautiefe Rz im Bereich von Rz5 bis Rz10 benötigt, die durch Drehen der Oberflächen erzielt werden kann.

Weiterhin führt die Verwendung der erfindungsgemäßen Dichtscheibe in dem Kraftstoffinjektor zu einer Verringerung beziehungsweise einer Vermeidung der Abhängigkeit der Stabilität des Injektors von der sogenannten Pratzkraft im Motorblock, so dass eine Stabilität gegen eine Schiefstellung des Düsenkörpers gegenüber dem Haltekörper erhöht wird.

Folglich kann mit der erfindungsgemäßen Dichtscheibe ein Hochdruckkraftstoffinjektor umgesetzt werden, der aus wenigen, einfach gefertigten Bauteilen mit einem simplen Aufbau besteht und der dennoch hohen Druckanforderungen standhalten kann.

Kurze Beschreibung der Zeichnungen
- Figur 1: zeigt einen Übergangsbereich zwischen Haltekörper und Düsenkörper eines Injektors gemäß der bevorzugten Ausführungsform der Erfindung im Querschnitt;
- Figur 2: zeigt den in Figur 1 gezeigten Übergangsbereich zwischen Haltekörper und Düsenkörper des erfindungsgemäßen Injektors im vollständig verspannten Zustand der Dichtscheibe im Querschnitt; und

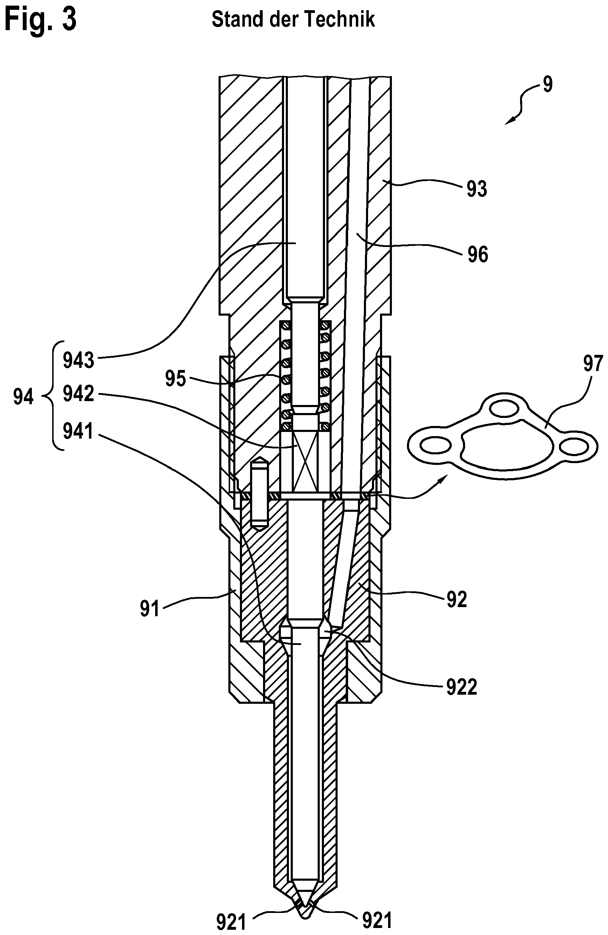

- Figur 3: zeigt einen Injektor gemäß dem Stand der Technik im Querschnitt.

### Bevorzugte Ausführungsform der Erfindung

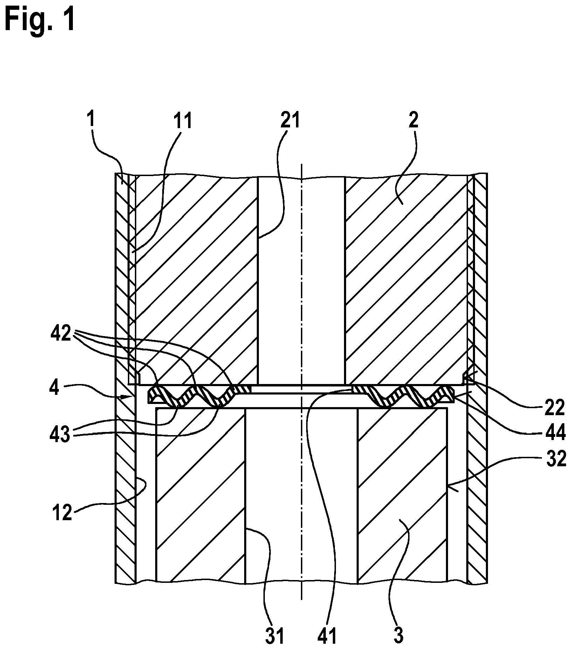

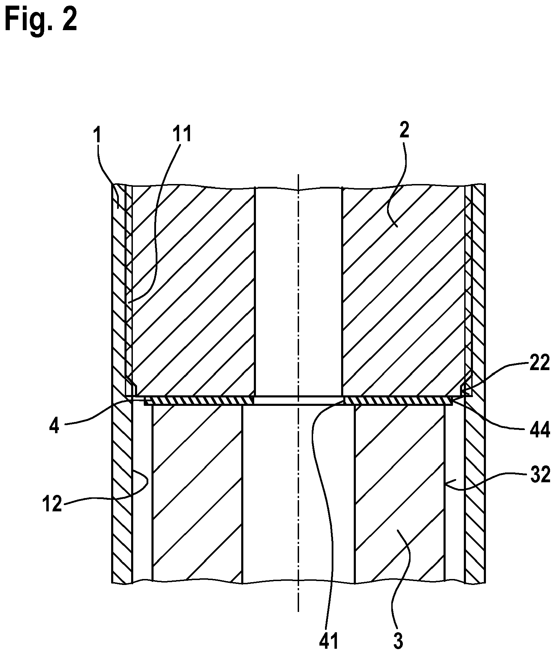

In Figuren 1 und 2 ist eine bevorzugte Ausführungsform der erfindungsgemäßen Dichtscheibe im eingebauten Zustand in einem Kraftstoffinjektor im Querschnitt gezeigt, wobei die Dichtscheibe in Figur 1 im noch unverformten Zustand und in Figur 2 im eingespannten, verformten Zustand dargestellt ist. In beiden Figuren ist der grundlegende Aufbau des erfindungsgemäßen Kraftstoffinjektors gezeigt wie folgt: In einer Spannmutter 1, auch als Düsenspannmutter bezeichnet, ist ein Haltekörper 2, auch als Injektorkörper bezeichnet, ein Düsenkörper 3 sowie eine zwischen diesen angeordnete Dichtscheibe 4 angeordnet. Der Haltekörper 2 weist dabei in der bevorzugten Ausführungsform eine zentrale Haltekörperdurchgangsbohrung 21 entlang seiner Längsachse auf, und der Düsenkörper 3 weist eine zentrale Düsenkörperinnenbohrung 31 auf, die sich von einer dem Haltekörper 2 zugewandten Stirnseite des Düsenkörpers 3 bis hin zu den in der entgegengesetzten Seite des Düsenkörpers 3 vorgesehenen Düsenöffnungen (nicht gezeigt) erstreckt. In der Haltekörperdurchgangsbohrung 21 und der Düsenkörperinnenbohrung 31 ist ein Nadelkörper angeordnet, der in Figuren 1 und 2 zur Vereinfachung der Darstellung weggelassen wurde. Ein prinzipieller Aufbau des erfindungsgemäßen Kraftstoffinjektors kann dem beschriebenen Stand der Technik, das heißt der DE 101 15 214 A1 entnommen werden, wobei dabei jedoch eine dezentrale Kraftstoffzufuhr vermieden wird. Der Hochdruckkraftstoff wird bei der vorliegenden Ausführungsform durch die Haltekörperdurchgangsbohrung 21 und die Düsenkörperinnenbohrung 31 zu den Düsenöffnungen (nicht gezeigt) geführt. Der Haltekörper 2 weist ferner an seinem Außenumfang 22 ein Außengewinde auf, und der Innenumfang 12 der Spannmutter 1 weist ein Innengewinde auf, die zusammen eine Schraubverbindung 11 ausbilden. Um eine möglichst sichere Führung des Düsenkörpers 3 in Relation zum Haltekörper 2 beim Zusammenbau des Kraftstoffinjektors zu ermöglichen, ist üblicherweise eine Führungsstift-Führungsloch-Kombination zwischen diesen Bauteilen vorgesehen, die aus Gründen der Übersichtlichkeit bei den Figuren 1 und 2 ebenfalls weggelassen wurde. Um eine gegenseitige Störung zwischen der Dichtscheibe 4 und der (nicht gezeigten) Führungsstift-Führungsloch-Kombination zu verhindern, kann die Dichtscheibe 4 so vorgesehen sein, dass diese im verspannten Zustand den oder die Führungsstifte nicht erreicht, oder aber es können Bohrungen in der Dichtscheibe 4 vorgesehen sein, die ein Hindurchtreten der Führungsstifte durch diese ermöglichen, beispielsweise in Form von Langlöchern, um den Führungsstiften sowie der Formveränderung der Dichtscheibe 4 genügend Spiel zu geben.

Die Wellenform der Dichtscheibe 4, die in Figur 1 im noch nicht verspannten Zustand zu sehen ist, liegt hauptsächlich, oder in einer alternativen Ausführungsform auch ausschließlich, im Dichtbereich vor und umfasst eine Vielzahl von Erhöhungen 42, auch als Wellenberge oder Wellenspitzen mit Wellenkämmen bezeichnet, sowie eine Vielzahl von Vertiefungen 43, auch als Wellentäler bezeichnet, die sich jeweils in axialer Richtung der Dichtscheibe 4 erstrecken. Die Dichtscheibe 4 weist zudem eine Durchgangsbohrung 41 auf, die einen Durchgang zwischen der Haltekörperdurchgangsbohrung 21 des Haltekörpers 2 und der Düsenkörperinnenbohrung 31 des Düsenkörpers 3 ermöglicht, in dem der Hochdruckkraftstoff geleitet werden kann. Die Durchgangsbohrung 41 der Dichtscheibe 4 ist bei der bevorzugten Ausführungsform eine zentrale Durchgangsbohrung 41, kann aber alternativ dazu auch dezentral angeordnet sein oder als Langloch vorgesehen sein. Der Durchmesser der Durchgangsbohrung 41 der Dichtscheibe 4 ist unabhängig vom Verspannungszustand größer als der Innendurchmesser der Haltekörperdurchgangsbohrung 21 des Haltekörpers 2.

Wie es ferner in Figur 2 zu sehen ist, nimmt die Dichtscheibe 4 im fest zusammengeschraubten Zustand der Kraftstoffinjektors, also in einem Zustand, in dem der Haltekörper 2 so weit wie möglich in die Spannmutter 1 gegen den Düsenkörper 3 mittels der Schraubverbindung 11 eingeschraubt ist, die Gestalt einer geraden Scheibe unter Beibehaltung der Durchgangsbohrung 41 an, so dass an den Orten der Wellenberge 42 und der Wellentäler 43 lokal erhöhte Flächenpressungen zwischen dem Haltekörper 2 und dem Düsenkörper 3 entstehen, die eine Dichtigkeit zwischen diesen Bauteilen im Vergleich zu einer rein mechanischen statischen Pressung deren Stirnflächen aufeinander stark erhöht. Zudem wird durch die Verformung der Dichtscheibe 4 deren Außenumfang 44 in Richtung hin zu dem Innenumfang 12 der Spannmutter 1 gedrängt, wobei aber der Außenumfang 44 der Dichtscheibe 4 mit dem Innenumfang 12 der Spannmutter 1 nicht in Kontakt tritt, um ein radiales Verspannen zu vermeiden.

Die Dichtscheibe 4 kann insbesondere bei Common Rail-Kraftstoffinjektoren zum Einsatz kommen, kann aber auch bei jedem anderen Erzeugnis mit vergleichbarem Dichtkontakt eingesetzt werden.

## Patentansprüche

1. Kraftstoffinjektor zum Einspritzen von Kraftstoff in einen Brennraum einer Brennkraftmaschine, mit einer Spannmutter (1), einem in der Spannmutter (1) angeordneten Haltekörper (2) mit einer Haltekörperdurchgangsbohrung (21), einem in der Spannmutter (1) angeordneten Düsenkörper (3) mit einer Düsenkörperinnenbohrung (31) und zumindest einer Düsenöffnung, und einem in der Haltekörperdurchgangsbohrung (21) und der Düsenkörperinnenbohrung (31) angeordneten Nadelkörper, wobei der Kraftstoffinjektor ferner zumindest eine Dichtscheibe (4) aufweist, die eine Durchgangsbohrung (41) aufweist, wobei die Dichtscheibe (4) zwischen dem Haltekörper (2) und dem Düsenkörper (3) eingespannt ist und zumindest einen Übergang zwischen der Haltekörperdurchgangsbohrung (21) und der Düsenkörperinnenbohrung (31) abdichtet, wobei der Haltekörper (2) in der Spannmutter (1) durch eine Schraubverbindung (11) gegen den in der Spannmutter (1) axial gehaltenen Düsenkörper (3) eingespannt ist, wodurch die Dichtscheibe (4) zwischen dem Haltekörper (2) und dem Düsenkörper (3) beidseitig gepresst gehalten ist, **dadurch gekennzeichnet,**
**dass** die Dichtscheibe (4) im axialen Querschnitt eine Wellenform (42, 43) aufweist, wobei die Wellenform (42, 43) abwechselnde axiale Erhöhungen (42) und Vertiefungen (43) aufweist, die jeweils einen radial angeordneten konzentrischen Kreis ausbilden,
**dass** die Dichtscheibe (4) die Gestalt einer geraden Scheibe unter Beibehaltung der Durchgangsbohrung (41) annimmt, so dass an den Orten der Wellenberge (42) und der Wellentäler (43) lokal erhöhte Flächenpressungen zwischen dem Haltekörper (2) und dem Düsenkörper (3) entstehen.

2. Kraftstoffinjektor nach Anspruch 1, wobei die Dichtscheibe (4) aus einem Stahlblech mit hoher Festigkeit ausgebildet ist.

3. Kraftstoffinjektor nach einem der vorhergehenden Ansprüche, wobei die Dichtscheibe geeignet ist, Übergänge mit einem Druckunterschied bis mindestens 4000bar abzudichten.

4. Kraftstoffinjektor nach einem der vorhergehenden Ansprüche, wobei der Kraftstoffinjektor zum Einspritzen von mit Hochdruck beaufschlagtem Kraftstoff in den Brennraum dient, der in der Haltekörperdurchgangsbohrung (21) und der Düsenkörperinnenbohrung (31) geführt ist.

5. Kraftstoffinjektor nach einem der vorhergehenden Ansprüche, wobei die Brennkraftmaschine eine selbstzündende Brennkraftmaschine ist.

## Claims

1. Fuel injector for injecting fuel into a combustion chamber of an internal combustion engine, having a clamping nut (1), having a holding body (2) which is arranged in the clamping nut (1) and which has a holding body passage bore (21), having a nozzle body (3) which is arranged in the clamping nut (1) and which has a nozzle body internal bore (31) and at least one nozzle opening, and having a needle body which is arranged in the holding body passage bore (21) and the nozzle body internal bore (31), wherein the fuel injector furthermore has at least one sealing disk (4) which has a passage bore (41), wherein the sealing disk (4) is clamped between the holding body (2) and the nozzle body (3) and seals off at least one transition between the holding body passage bore (21) and the nozzle body internal bore (31), wherein the holding body (2) in the clamping nut (1) is clamped by means of a screw connection (11) against the nozzle body (3) which is held axially in the clamping nut (1), whereby the sealing disk (4) is held, with a pressing action on both sides, between the holding body (2) and the nozzle body (3), **characterized in that** the sealing disk (4) has an undulating shape (42, 43) in axial cross section, wherein the undulating shape (42, 43) has alternating axial elevations (42) and depressions (43) which each form a radially arranged concentric circle, **in that** the sealing disk (4) assumes the form of a straight disk with the passage bore (41) being maintained, such that locally increased contact pressures arise between the holding body (2) and the nozzle body (3) at the locations of the undulation peaks (42) and the undulation troughs (43) .

2. Fuel injector according to Claim 1, wherein the sealing disk (4) is formed from a high-strength steel sheet.

3. Fuel injector according to one of the preceding claims, wherein the sealing disk is suitable for sealing off transitions with a pressure difference of up to at least 4000 bar.

4. Fuel injector according to one of the preceding claims, wherein the fuel injector serves for the injection of highly pressurized fuel into the combustion chamber, which fuel is conducted in the holding body passage bore (21) and the nozzle body internal bore (31).

5. Fuel injector according to one of the preceding claims, wherein the internal combustion engine is an auto-ignition internal combustion engine.

## Revendications

1. Injecteur de carburant destiné à injecter du carburant dans un espace de combustion d'un moteur à combustion interne et présentant un écrou de serrage (1), un corps de retenue (2) disposé dans l'écrou de serrage (1) et présentant un alésage (21) de traversée du corps de retenue, un corps de tuyère (3) disposé dans l'écrou de serrage (1) et doté d'un alésage intérieur (31) de corps de tuyère et d'au moins une ouverture de tuyère et un corps en aiguille disposé dans l'alésage (21) de traversée du corps de retenue et l'alésage intérieur (31) de corps de tuyère,
l'injecteur de carburant présentant en outre au moins une plaque d'étanchéité (4) qui présente un alésage de passage (41), la plaque d'étanchéité (4) étant serrée entre le corps de retenue (2) et le corps de tuyère (3) et fermant de manière hermétique au moins un passage entre l'alésage (21) de traversée du corps de retenue et l'alésage intérieur (31) de corps de tuyère, le corps de retenue (2) étant serré dans l'écrou de serrage (1) par une liaison filetée (11) contre le corps de tuyère (3) maintenu axialement dans l'écrou de serrage (1), de telle sorte que la plaque d'étanchéité (4) soit maintenue en compression des deux côtés entre le corps de retenue (2) et le corps de tuyère (3),
**caractérisé en ce que**
la plaque d'étanchéité (4) présente en coupe transversale axiale une forme ondulée (42, 43),
**en ce que** la forme ondulée (42, 43) présente une alternance axiale de rehaussement (42) et de creux (43) qui forme un cercle concentrique disposé radialement,
**en ce que** la plaque d'étanchéité (4) prend la forme d'une plaque rectiligne en conservant l'alésage de passage (41) de telle sorte qu'à l'emplacement des sommets (42) et des fonds (43) des ondulations, des compressions de surface localement accrues se forment entre le corps de retenue (2) et le corps de tuyère (3) .

2. Injecteur de carburant selon la revendication 1, dans lequel la plaque d'étanchéité (4) est formée d'une tôle d'acier à haute résistance.

3. Injecteur de carburant selon l'une des revendications précédentes, dans lequel la plaque d'étanchéité convient pour assurer l'étanchéité de transition présentant une différence de pression pouvant atteindre au moins 4 000 bars.

4. Injecteur de carburant selon l'une des revendications précédentes, dans lequel l'injecteur de carburant sert à injecter du carburant placé sous haute pression dans l'espace de combustion situé dans l'alésage (21) de traversée du corps de retenue et l'alésage (31) de corps de tuyère.

5. Injecteur de carburant selon l'une des revendications précédentes, dans lequel le moteur à combustion interne est un moteur à combustion interne à auto-allumage.
